# EUROPÄISCHE PATENTANMELDUNG

(11) **EP 2 622 999 A1**
(43) Veröffentlichungstag der Anmeldung: **07.08.2013**
(21) Anmeldenummer: 13153680.7
(22) Anmeldetag: 01.02.2013
(51) Int. Cl.: A47J 43/07

(54) **Topfförmiges Gargefäß und mindestens ein Aufsatzteil**

(30) Priorität: 06.02.2012 DE 102012100939
(71) Anmelder: Vorwerk & Co. Interholding GmbH, 42275 Wuppertal (DE)
(72) Erfinder: Meggle, Martin, 33442 Herzebrock (DE); Hüsig, Matthias, 40878 Ratingen (DE)
(74) Vertreter: Müller, Enno

(57) **Zusammenfassung**

Die Erfindung betrifft ein topfförmiges Gargefäß (3) und mindestens ein Aufsatzteil (13), wobei das Gargefäß (3) einen Deckel (8), der vorzugsweise einen bspw. mittigen Dampfdurchlass (11) belässt, aufweist, wobei das Aufsatzteil (13) auf den Deckel (8) aufsetzbar ist. Um ein Gargefäß und mindestens ein Aufsatzteil insbesondere hinsichtlich der Sicherheit bei der Handhabung zu verbessern, ist eine mechanische oder magnetische Festsetzung des Aufsatzteils (13) an dem Deckel (8) vorgesehen.

## Beschreibung

Die Erfindung betrifft ein topfförmiges Gargefäß und mindestens ein Aufsatzteil, wobei das Gargefäß einen Deckel, der vorzugsweise einen bspw. mittigen Dampfdurchlass belässt, aufweist, wobei das Aufsatzteil auf den Deckel aufsetzbar ist.

Topfförmige Gargefäße sind bekannt, so insbesondere als Gargefäße im Haushaltsbereich. Weiter sind derartige Gargefäße zum Einsatz in elektrisch betriebenen Küchenmaschinen bekannt. Diese dienen insbesondere zum Garen von Lebensmitteln in dem Gargefäß, wobei bevorzugt bodenseitig des Gargefäßes eine Aufheizung ermöglicht ist. Diesbezüglich wird bspw. auf die DE 44 14 823 A1 verwiesen. Das dort vorgesehene Gargefäß ist mit einem Deckel verschließbar, welcher Deckel mittig eine Durchtrittsöffnung aufweist, so bspw. zum Hinzufügen weiterer Lebensmittel und/oder bspw. Gewürze auch während des Garprozesses. Darüber hinaus dient die Öffnung auch zum Durchtritt bzw. Austritt von in dem Gargefäß aufgebautem Dampf. Weiter ist bekannt, das Gargefäß mit Aufsatzteilen zu versehen, so weiter bevorzugt im Zusammenhang mit einer vorbeschriebenen Küchenmaschine mit einem Garaufsatz. Ein solcher Garaufsatz wird bevorzugt auf den Deckel des Gargefäßes aufgestellt. Der Deckel bietet eine entsprechende Aufstellfläche an. Ein Aufsatzteil insbesondere in Form eines Garaufsatzes ist insbesondere bodenseitig perforiert, weiter bevorzugt mit mindestens einer Durchtrittsöffnung versehen, durch welche Dampf aus dem Gargefäß, die Dampfdurchtrittsöffnung des Deckels durchsetzend, in das Aufsatzteil dringen kann, um hier bevorzugt weiter angeordnete Lebensmittel zufolge Dampfgaren zuzubereiten, wozu weiter bevorzugt ein solches Aufsatzteil in Form eines Garaufsatzes wiederum deckelverschlossen ist.

Im Hinblick auf den vorbeschriebenen Stand der Technik wird eine technische Problematik der Erfindung darin gesehen, ein Gargefäß und mindestens ein Aufsatzteil insbesondere hinsichtlich der Sicherheit bei der Handhabung zu verbessern.

Eine mögliche Lösung der Aufgabe ist nach einem ersten Erfindungsgedanken bei einem Gargefäß gegeben, bei welchem auf eine mechanische oder magnetische Festsetzung des Aufsatzteils an dem Deckel abgestellt ist. Zufolge dieser Lösung ist das auf den Deckel des Gargefäßes aufsetzbare Aufsatzteil, welches neben dem vorbeschriebenen Garaufsatz auch ein weiteres Geräteteil oder weiter bevorzugt auch ein zwischen dem Garaufsatz und dem Deckel einsetzbares Aufsatzteil sein kann, an dem Deckel fixierbar. Der Gefahr, dass bspw. zufolge Anstoßen ein auf dem Deckel aufgesetzter Garaufsatz insbesondere während des Garprozesses herunterfällt, ist durch die vorgeschlagene Lösung verhindert. Die mechanische oder magnetische Festsetzung ist dabei bevorzugt so gestaltet, dass sich eine für den Anwender günstige und leicht zu handhabende Lösung der Fixierung erreichen lässt, dies unter entsprechender Aufhebung der mechanischen oder magnetischen Festsetzung. Insgesamt ist hierdurch in vorteilhafter Weise der Umgang mit dem Gargefäß und dem hierauf aufgesetzten Aufsatzteil sicherer.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer bevorzugten Ausgestaltung vorgesehen, dass das Aufsatzteil in unterschiedlichen Umfangsausrichtungen relativ zu dem Gargefäß auf dem Deckel festsetzbar ist, weiter bevorzugt in unterschiedlichen, vorgegebenen Umfangsausrichtungen. So ist bevorzugt das Aufsatzteil an dem Deckel in mindestens zwei bis hin zu 60 Umfangsstellungen, weiter bevorzugt 3 bis 8 Umfangsstellungen an dem Deckel festsetzbar. Die gewünschte Umfangsausrichtung des Aufsatzteiles relativ zu dem Deckel ist bspw. benutzerseitig gewünscht. Darüber hinaus können durch die umfangsmäßig verschiedenen Ausrichtungen des Aufsatzteiles auf dem Deckel unterschiedlich wirkende Garprozesse in einem als Garaufsatz ausgebildeten Aufsatzteil ausgelöst werden, so bspw. zufolge unterschiedlich großer und/ oder unterschiedlich angeordneter Durchströmöffnungen für den Dampf in Abhängigkeit von der relativen Ausrichtung des Aufsatzteiles zu dem Deckel.

Bevorzugt wird weiter, dass das Aufsatzteil durch eine Magnetverhaftung zwischen dem Aufsatzteil und dem Deckel festsetzbar ist. Diesbezüglich sind bevorzugt in Umfangsrichtung mehrere magnetisch zusammenwirkende Teile sowohl an dem Deckel als auch an dem Aufsatzteil vorgesehen, so insbesondere 1 bis 60, weiter bevorzugt 3 bis 8 solcher Teile im Deckel sowie im Aufsatzteil. Bevorzugt wird eine Ausgestaltung, bei welcher umfangsmäßig gleichmä-βig verteilt an dem Deckel drei magnetisch wirkende Teile und an dem Aufsatzteil gleichfalls drei solcher Teile vorgesehen sind. Hierbei können sowohl im Deckel als auch an dem Aufsatzteil Dauermagnete vorgesehen sein, welche gerichtet auf die Trennebene zwischen Deckel und Aufsatzteil unterschiedlich gepolt sind. Alternativ ist entweder der Deckel oder das Aufsatzteil mit mindestens einer entsprechend positionierten Metallplatte (Eisenplatte) oder dergleichen versehen, während das gegenüberliegende Teil (Aufsatzteil oder Deckel) entsprechend positionierte Permanentmagnete aufweist. Im Falle der Anordnung einer oder mehrerer Metallplatten ist in einer weiter bevorzugten Ausgestaltung auch die Anordnung einer kreisringförmigen Metallplatte vorgesehen, welche die magnetische Festsetzung des Aufsatzteiles an dem Deckel anbietet, jedoch keine in Umfangsrichtung unterschiedliche Festsetzung. Bei den Magneten handelt es sich weiter bevorzugt um scheibenförmige Magnete, mit einer bevorzugten Bauhöhe von 1,5 bis 4 mm, weiter bevorzugt 2 mm und einem Durchmesser von 5 bis 10 mm, weiter bevorzugt 8 mm. Damit die Haltekräfte möglichst groß sind, werden diese so in dem Deckel und/ oder in dem Aufsatzteil platziert, dass deren flachen Seiten gegenüberliegen und der Abstand zwischen zwei sich anziehenden Magneten möglichst klein ist. Weiter bevorzugt sind die Magnete im Bereich des Deckels insgesamt kreisförmig auf der Auflagefläche für das Aufsatzteil positioniert, hierbei weiter bevorzugt möglichst weit nach radial außen positioniert. Um mehrere Festsetzpositionen anzubieten, sind die Magnete umfangsmäßig gleichmäßig auf dem Deckel und/oder unterseitig des Aufsatzteiles angeordnet, so bevorzugt unter Einschluss eines Winkels von etwa 120° zwischen zwei Magneten. Dies weiter bevorzugt, wenn insgesamt drei Magnete über den Umfang verteilt vorgesehen sind. Wie weiter unten noch im Einzelnen erläutert, können auch mehrere und in anderer Ausgestaltung angeordnete Magnete vorgesehen sein.

Eine Lösung des an dem Deckel festgesetzten Aufsatzteiles ist in handhabungstechnisch einfacher Weise zufolge Verdrehen des Aufsatzteiles gegenüber dem Deckel erreichbar. Durch Verdrehen der Teile zueinander nimmt die Anziehungskraft der Magnete von Deckel und Aufsatzteil ab, wodurch eine leichte Trennung erreichbar ist. Die Festsetzung ist entsprechend in vorteilhafter Weise ruckfrei aufhebbar. Insbesondere einem Überschwappen heißer Medien aus dem Aufsatzteil, bspw. aus dem Garaufsatz, ist beim Lösen der Festsetzung entgegengewirkt. Hierbei wird das physikalische Prinzip genutzt, dass die wirkende Kraft bei einem quer zu der Anhaftfläche des Magneten verschobenen Magneten wesentlich geringer ist, bspw. nur ein Fünftel bis ein Siebtel der Haltekraft beträgt, die bei zueinander ausgerichteten Magneten und in einer Richtung senkrecht zu der Anhaftfläche der Magneten gegeben sind.

Die Magnete können in unterschiedlicher Bauhöhe zur Anwendung kommen. Beispielsweise als Flachmagnete, mit einer Höhe, die kleiner ist als ihr Durchmesser, aber auch in einer Turmform, mit einer Höhe, die größer ist als ihr Durchmesser.

Zum Lösen der magnetischen Festsetzung muss durch den Benutzer eine Kraft eingeleitet werden, so bevorzugt über einen oder mehrere Griffe des Aufsatzteiles. Die einzuleitende Kraft hängt hierbei von der Stärke der Magnete ab. Durch mehrere Magnete, welche sich zugleich aufeinander verschieben können. Ein Drehmoment, das hierbei anzuwenden ist, kann im Bereich von 3 Nm bis 5 Nm bspw. liegen. Wesentlicher ist aber die Kraft, die ein Benutzer aufzuwenden hat. Diesbezüglich kommt es auf die Länge des Hebelarmes an. Eine aufzuwendende Kraft in einem Bereich von 5 N bis 15 N wird bevorzugt. In alternativer Ausgestaltung ist das Aufsatzteil durch ledigliche Vertikal- und/ oder Umfangsbewegung mit dem Deckel verrastbar. Diesbezüglich bietet sich insbesondere eine Bajonettverriegelung an, in weiterer Ausgestaltung eine mechanische Verrastung.

Alternativ zu einer Magnet-Magnet-Lösung oder einer Lösung mit einem Dauermagneten und einer Metallplatte ist zur Erzielung einer magnetischen Festsetzung des Aufsatzteiles an dem Deckel auch eine elektromagnetische Verriegelung möglich, die bei Aktivierung eine Festsetzung herbeiführt und bei Deaktivierung ein einfaches Abheben des Aufsatzteiles von dem Deckel ermöglicht. Die elektromagnetische Festsetzung wirkt weiter bevorzugt in Abhängigkeit vom Betrieb des Gargefäßes, insbesondere vom Betrieb der das Gargefäß aufweisenden Küchenmaschine.

Weiter ist bevorzugt, dass ein Aufsatzteil hinsichtlich seiner Oberseite und seiner Unterseite unterschiedlich auf den Deckel oder ein weiteres Aufsatzteil aufsetzbar ist und dass eine nicht vorzuziehende Ausrichtung des Aufsatzteils durch abstoßende Magnete verdeutlicht ist. Werden entsprechend die zusammenwirkenden Teile, insbesondere festsetzbaren Teile fälschlicherweise kombiniert, die nicht zusammengehören oder die in nicht ordnungsgemäßer Ausrichtung angeordnet sind, wird der Benutzer insbesondere durch sich abstoßende Magnete auf den Fehler hingewiesen.

Weiter ist bevorzugt über die Stellung des Aufsatzteiles relativ zum Gargefäß eine Steuerung realisierbar. So ist bevorzugt die Umfangsausrichtung des Aufsatzteiles erfassbar, bspw. unter Nutzung eines Reed-Kontakts, dessen Signalauswertung weiter bevorzugt dazu genutzt wird, bspw. Parameter der das Gargefäß aufweisenden Küchenmaschine zu verändern. So ist bspw. in Abhängigkeit von der Umfangsausrichtung die Heizleistung einstellbar.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in Seitenansicht eine elektrische Küchenmaschine mit einem Gargefäß und einem Aufsatzteil in Form eines Obergefäßes;
- Fig. 2: eine Vertikalschnittdarstellung durch den Deckelbereich des Gargefäßes mit aufgesetztem Obergefäß;
- Fig. 3: den Deckel des Gargefäßes in einer perspektivischen Einzeldarstellung;
- Fig. 4: die Herausvergrößerung des Bereiches IV in Fig. 3;
- Fig. 5: in perspektivischer Unteransicht das Obergefäß;
- Fig. 6: die Herausvergrößerung des Bereiches VI in Fig. 5;
- Fig. 7: in schematischer Darstellung den Deckel des Gargefäßes sowie das Obergefäß in einer ersten relativen Umfangsstellung zueinander, unter Bildung einer maximalen Öffnungsfläche zum Durchtritt von Dampf;
- Fig. 8: eine der Fig. 7 entsprechende Darstellung, jedoch in einer umfangsversetzten Stellung des Obergefäßes relativ zum Deckel, bei entsprechender Reduzierung der Öffnungsfläche;
- Fig. 9: eine weitere Darstellung gemäß Fig. 7 bei weiterer Relativverdrehung des Obergefäßes gegenüber dem Deckel unter Erzielung einer minimalen Öffnungsfläche;
- Fig. 10: in schematischer Draufsicht den Deckel und das Obergefäß in einer relativen Drehausrichtung zum Anbieten einer maximalen Durchtritts-Öffnungsfläche, eine zweite Ausführungsform betreffend;
- Fig. 11: eine der Fig. 10 entsprechende Darstellung, nach Verdrehen des Obergefäßes in Umfangsrichtung relativ zu dem Deckel;
- Fig. 12: in schematischer Draufsichtdarstellung den Deckel und das Obergefäß in Einzeldarstellungen, eine weitere Ausführungsform betreffend;
- Fig. 13: die zusammengesetzte Stellung von Deckel und Obergefäß in einer Ausrichtung des Obergefäßes gemäß Fig. 12;
- Fig. 14: eine der Fig. 13 entsprechende Darstellung nach Verdrehen des Obergefäßes in Umfangsrichtung relativ zu dem Deckel;
- Fig. 15: eine weitere Verdrehstellung des Obergefäßes relativ zum Deckel;
- Fig. 16: in weiterer Ausführungsform eine Seitenansicht gegen das Gargefäß mit aufgesetztem Obergefäß, wobei zur Einstellung eines unterschiedlichen Dampfdurchlasses ein Schieber vorgesehen ist;
- Fig. 17: eine schematische Draufsichtdarstellung, insbesondere den Zusammenwirkungsbereich einer Durchtrittsöffnung mit dem blendenartigen Schieber betreffend;
- Fig. 18: eine der Fig. 17 entsprechende Darstellung, jedoch bei alternativer Ausgestaltung der schieberartigen Blende;
- Fig. 19: eine der Fig. 13 entsprechende schematische Draufsichtdarstellung, eine weitere Ausführungsform betreffend;
- Fig. 20: in perspektivischer Darstellung gemäß Fig. 3 den Deckel in einer weiteren Ausführungsform;
- Fig. 21: in Seitenansichtdarstellung das Gargefäß mit einem Deckel gemäß Fig. 20 und einem aufgesetzten Obergefäß in einer Umfangsstellung;
- Fig. 22: eine der Fig. 21 entsprechende Darstellung, jedoch nach Verdrehen des Obergefäßes in Umfangsrichtung;
- Fig. 23: in alternativer Ausführungsform eine Ergänzung zu der Ausführungsform gemäß den Fig. 20 bis 22 einen Vertikalschnitt durch eine Durchtrittsöffnung mit einem mit dieser zusammenwirkenden keilartigen Vorsprung.

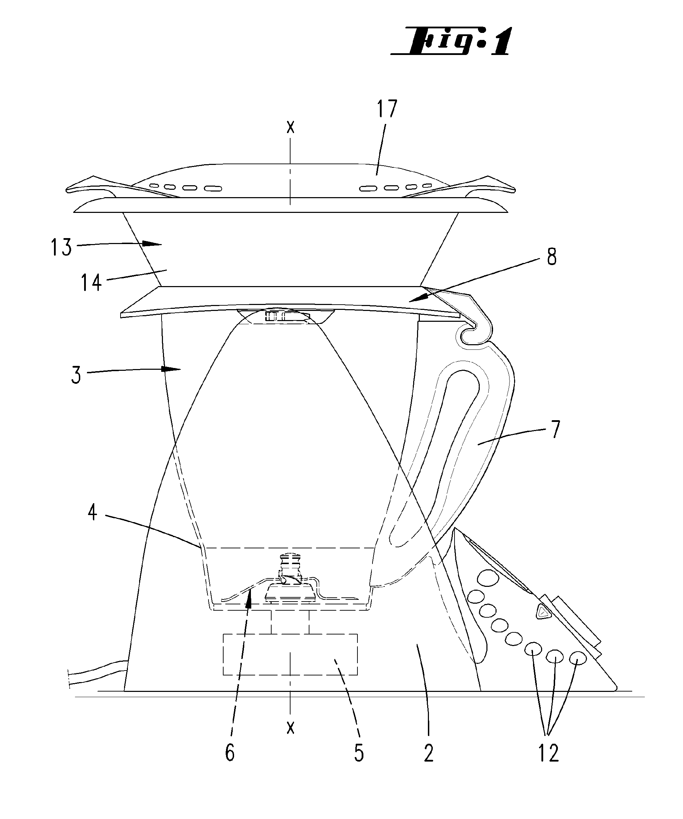

Dargestellt und beschrieben ist zunächst mit Bezug zu Fig. 1 eine Küchenmaschine 1 mit einem Gehäuse 2 zur Aufnahme eines Gargefäßes 3.

Zur Lagerung des Gargefäßes 3 ist die Küchenmaschine 1 gehäuseseitig mit einer Gefäßaufnahme 4 versehen. Ein in dem Gehäuse 2 in der dargestellten Ausführungsform bevorzugt angeordneter Elektromotor 5 dient zum Antrieb eines in dem Gargefäß 3 bodenseitig vorgesehenen Rührwerks 6, welches über eine Kupplungsanordnung mit der Antriebswelle des Elektromotors 5 in kraftschlüssiger Verbindung bringbar ist.

Das Gargefäß 3 ist mit einem seitlichen Handgriff 7 versehen. Dieser erstreckt sich nahezu über die gesamte mantelwandaußenseitige Höhe des Gargefäßes 3, welche Mantelwandung des Gargefäßes 3 sich zur nach oben gerichteten Gargefäßöffnung hin trichterförmig erweitert.

Die Gargefäßöffnung ist insbesondere im Betrieb der Küchenmaschine 1, weiter insbesondere im Betrieb des Gargefäßes 3 überdeckt von einem Deckel 8. Dieser ist bevorzugt bajonettartig verriegelbar, so insbesondere in Zusammenwirkung mit turmartigen Gehäuseabschnitten der Küchenmaschine 1, nach welcher Verriegelung der Deckel 8 auch fest mit dem Gargefäß 3 verbunden ist.

Der Deckel 8 bietet eine dem Gargefäßinneren abgewandte, nach oben gerichtete Aufstandsfläche 9, insbesondere gebildet durch die Oberseite einer insbesondere im Betrieb im Wesentlichen horizontal ausgerichteten Deckelwand 10. Weiter bevorzugt ist die Deckelwand 10 bzw. die Aufstandsfläche 9 quergerichtet zu einer im Betrieb vertikalen Achse x, welche Achse insbesondere das Gargefäß 3 sowie die Aufstandsfläche 9 mittig durchsetzt und weiter bevorzugt die Drehachse des im Bodenbereich des Gargefäßes 3 bevorzugt vorgesehenen Rührwerks 6 aufnimmt.

In der Deckelwand 10 ist weiter bevorzugt ein Dampfdurchlass 11 ausgebildet. Hierbei handelt es sich um eine die Deckelwand 10 durchsetzende Öffnung.

In der vorbeschriebenen Konstellation ist die Küchenmaschine 1 dazu geeignet, in dem Gargefäß 3 ggf. unter ständigem Umwälzen des in dem Gargefäß 3 befindlichen Mediums, wie bspw. Wasser oder eine Brühe, eine Speise insbesondere durch Wärmezufuhr zuzubereiten. Hierzu ist weiter bevorzugt, insbesondere dem Bodenbereich des Gargefäßes 3 zugeordnet, eine Heizung in der Küchenmaschine 1 vorgesehen. Diese Heizung ist bevorzugt über Temperatursteller 12 in Form von Tasten oder Drehstellern hinsichtlich ihrer Heizleistung einstellbar.

Die Küchenmaschine 1 dient darüber hinaus bevorzugt auch zum Garen von Speisen, so insbesondere unter Nutzung des in dem Gargefäß 3 erzeugten und durch den Dampfdurchlass 11 des Deckels 8 nach oben abziehenden Dampfes. Hierzu ist gemäß der Darstellung in Fig. 1 auf dem Deckel 8 des Gargefäßes 3 ein Aufsatzteil 13 in Form eines Obergefäßes 14 aufgesetzt. Dieses ist bevorzugt schüsselartig geformt mit einer in der Aufsetzstellung bevorzugt parallel zur Aufstandsfläche 9 des Deckels 8 verlaufenden Trennwand 15 in Form eines Gargut-Auflagebodens 16. Dies bietet in bevorzugter Ausgestaltung ein großflächiges, weiter bevorzugt vollflächiges Abstellen des Obergefäßes 14 auf dem Deckel 8.

Das Obergefäß 14 ist weiter bevorzugt im Betriebszustand überdeckt von einem Obergefäßdeckel 17.

Zum Eintritt von in dem Gargefäß 3 erzeugten Dampf in das Obergefäß 14 ist im Bereich des Gargut-Auflagebodens 16 eine Dampfdurchtrittsöffnung 18 ausgebildet. Entsprechend ist der Gargut-Auflageboden 16 bzw. die hierdurch gebildete Trennwand 15 zumindest partiell dampfdurchlässig eingestellt.

In bevorzugter Ausgestaltung ist das Aufsatzteil 13 bzw. das Obergefäß 14 auf dem Deckel 8 des Gargefäßes 3 zumindest in einer Umfangsausrichtung des Obergefäßes 14 relativ zum Deckel 8 festsetzbar. Dies ist bevorzugt, wie auch dargestellt, erreicht durch eine magnetische Festsetzung.

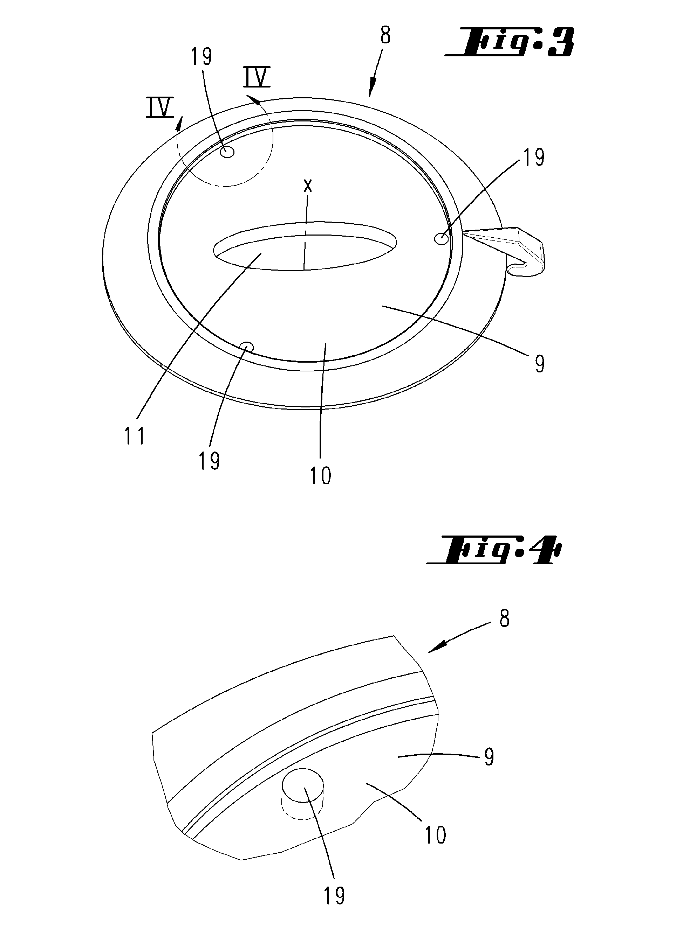

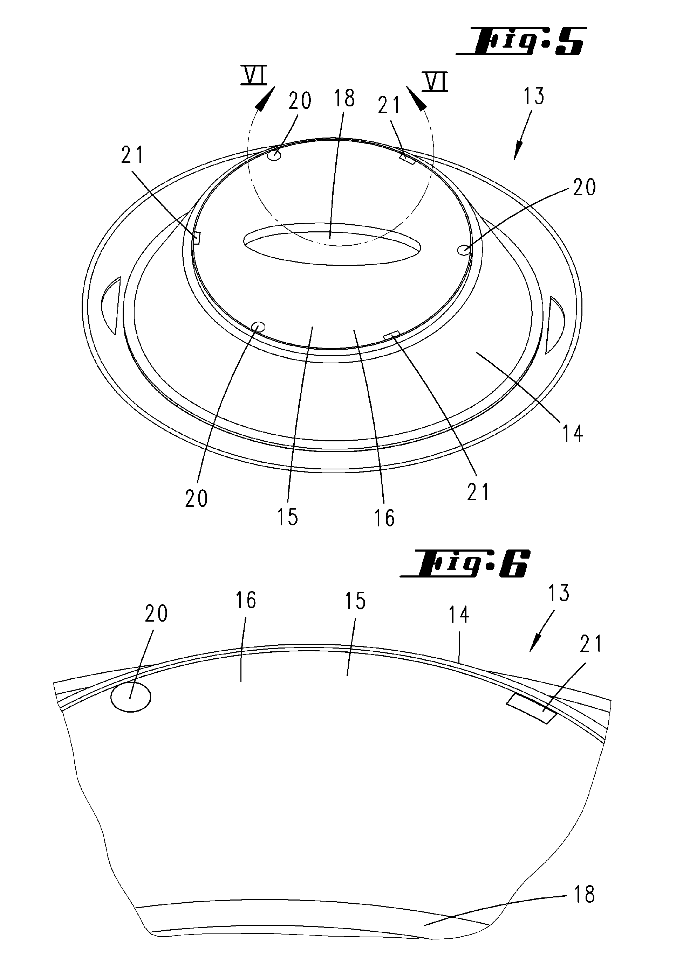

Hierzu sind gemäß dem in den Fig. 1 bis 9 dargestellten ersten Ausführungsbeispiel in dem Deckel 8, insbesondere in der Deckelwand 10, zugeordnet einem radial äußeren Randbereich der Aufstandsfläche 9, drei oder mehr Magnete 19 in das Deckelmaterial eingelassen. Mehrere Magnete erhöhen ersichtlich auch die Anzahl der möglichen Positionen. Je nach Stärke der Magnete kann hierdurch auch die Gesamthaltekraft erhöht werden. Die Anzahl der Magnete im Deckel bzw. in der Aufstandsfläche können auch unterschiedlich sein. Durch die Winkelverteilung kann erreicht werden, dass bspw. immer eine Mindestanzahl von bspw. drei Magneten in der Aufstandsfläche und im Deckel ausgerichtet zueinander sind, also sich in der Wirkstellung befinden, eine Verschiebung der Aufstandsfläche dann aber um einen geringeren Winkelbetrag als bspw. 120° möglich ist, und bei diesem geringeren Winkelbetrag, bevorzugt in der Halbierenden zwischen den zwei in Wirkstellung befindlichen Magneten, dann ein weiterer Magnet in Wirkstellung mit dem zuvor schon "aktiv" gewesenen Magneten oder Metallteil in dem Deckel kommt. Bei den Magneten handelt es sich in weiterer Einzelheit bevorzugt um scheibenförmige Magnete mit einer bevorzugten Bauhöhe von 2 mm und einem bevorzugten Durchmesser von 8 mm, wobei die Anordnung der Magnete 19 weiter so gewählt ist, dass eine der Flachseiten eines jeden Magnets 19 mit der Ebene der Aufstandsfläche 9 fluchtet oder nahezu annähernd mit dieser fluchtet.

Alternativ zu einzelnen Magneten kann auch ein, bevorzugt geschlossen umlaufend ausgebildet, bandförmiges Magnetelement verwirklicht sein. Dieses Magnetelement kann aus einem einzigen magnetischen Werkstoff bestehen oder aus einer Vielzahl von einzelnen in dieser Konstellation nebeneinander angeordneten Magneten. Es wird beispielsweise auf die bei Kühlschränken bekannten Streifenmagnet-Verschlüsse verwiesen.

Weiter sind die Magnete 19 über den Umfang betrachtet gleichmäßig beabstandet vorgesehen, schließen entsprechend in Umfangsrichtung jeweils einen Winkel von bevorzugt 120° zueinander ein. Es können darüber hinaus auch mehr Magnete vorgesehen sein, wobei sich dann entsprechend bevorzugt auch unterschiedliche - kleinere - Winkelabstände zwischen den Magneten ergeben. Beispielsweise bei vier Magneten ist dann bevorzugt ein Winkelabstand von 90° zwischen den Magneten verwirklicht.

Darüber hinaus sind weiter bevorzugt auch an dem Aufsatzteil 13, weiter insbesondere in dem Gargut-Auflageboden 16 Magnete 20 angeordnet, die insbesondere bezüglich ihres radialen Abstandes zur Achse x sowie bezüglich der umfangsmäßigen Beabstandung untereinander gleich angeordnet sind wie die Magnete 19 im Deckel 8. Auch hier handelt es sich bevorzugt um scheibenförmige Magnete der vorbeschriebenen Art und Dimension.

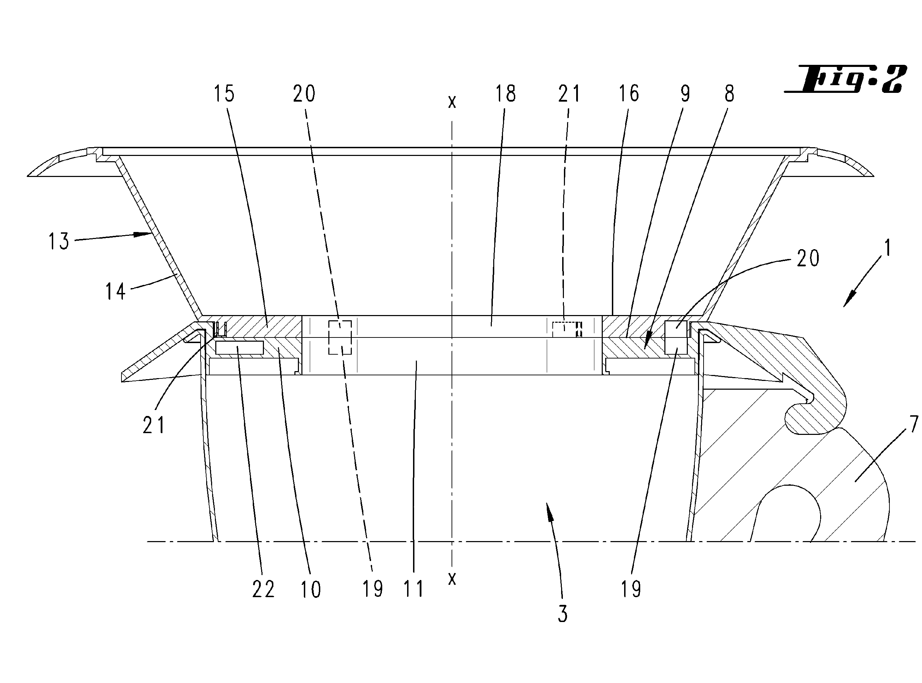

Die Magnete 19 und 20 von Deckel 8 und Obergefäß 14 sind so positioniert, dass in der ordnungsgemäßen Zusammenwirkungsstellung gemäß Fig. 2 entgegengesetzte Pole aufeinander zu weisen, so dass eine Festsetzung des Obergefäßes 14 auf dem Deckel 8 zufolge magnetischer Anziehung erreicht ist.

Des Weiteren sind im Bereich des Gargut-Auflagebodens 16 bevorzugt, wenngleich nicht zwingend, auf einer größeren Umfangslinie der Magnete 20 zwischen zwei in Umfangsrichtung benachbarten Magneten 20 eine Metallplatte (Eisenplatte) eingelassen.

Insbesondere die Aufstandsfläche 9 und die zugewandte Unterseite des Gargut-Auflagebodens 16, darüber hinaus die entsprechende Anordnung der Magnete 19 und 20 ist so gewählt, dass die aufeinander zu weisenden Flachseiten der Magnete 19 und 20 in der Zuordnungsstellung gering zueinander in Vertikalrichtung beabstandet sind, bis hin zu einer direkten Anlage.

Zur Anordnung des Obergefäßes 14 auf dem Deckel 8 wird das Obergefäß 14 durch den Benutzer in üblicher Weise auf den Deckel 8 bzw. auf dessen Aufstandsfläche 9 aufgestellt und hiernach ggf. in Umfangsrichtung ausgerichtet. Bei Annäherung der Magnete 19 und 20 richtet sich das Obergefäß 14 zufolge der Anziehungskräfte bevorzugt selbsttätig aus. Das Obergefäß 14 sitzt hiernach fest auf dem Deckel 8 bzw. auf dem Gargefäß 3 auf, kann entsprechend nicht, bspw. zufolge Anstoßen, herunterfallen. Dennoch ist das Obergefäß 14 durch den Benutzer wieder leicht von dem Gargefäß 3 bzw. von dem Deckel 8 lösbar, indem das Obergefäß 14 relativ zu dem in der Küchenmaschine 1 festgelegten Gargefäß 3 bzw. dem festgelegten Deckel 8 verdreht wird. Bei einem solchen Verdrehen auch der Magnete 19 und 20 gegeneinander nimmt die Anziehungskraft mit zunehmender Entfernung ab, womit ein leichtes Lösen der Magnetverbindung ermöglicht ist.

Die vorgeschlagene Lösung dient weiter bevorzugt auch in Zusammenwirkung mit anderen Aufsatzteilen, weiter ggf. auch mit Aufsatzteilen, welche zwischen dem Deckel 8 und dem Obergefäß 14 anordbar sind. Solche weiteren Aufsetzteile unterscheiden sich bevorzugt hinsichtlich ihrer Oberseite und ihrer Unterseite (bspw. bezüglich der gewünschten Funktion). Die Magnete 20 sind hierbei bevorzugt derart in dem Aufsatzteil 13 positioniert, dass eine nicht vorzuziehende Ausrichtung des Aufsatzteiles durch abstoßende Magnete 19 und 20 dem Benutzer verdeutlicht wird.

Darüber hinaus ist insbesondere zufolge der Anordnung mehrerer Magnete 19 und 20 die Positionierung bspw. des Obergefäßes 14 in unterschiedlichen Umfangsausrichtungen relativ zu dem Deckel 8 ermöglicht, so weiter gemäß dem dargestellten Ausführungsbeispiel in drei unterschiedlichen Umfangsausrichtungen.

Die jeweilige Umfangsausrichtung bspw. des Obergefäßes 14 ist bevorzugt über einen "Reed"-Kontakt abfragbar, welcher weiter bevorzugt bei entsprechender Positionierung bevorzugt innerhalb der Deckelwand 10 mit einer der Metallplatten des Aufsatzteiles 13 zusammenwirkt. Diese Anordnung kann als zusätzliches Bedienelement (Mensch-Maschinen-Interface) benutzt werden. Je nach Position bzw. Ausrichtung des Obergefäßes 14 wird bspw. die Dampferzeugung für das Obergefäß 14 gesteuert, so bspw. für große oder kleine zu garende Portionen bzw. viel oder wenig Dampf. Weiter kann ein solcher Kontakt bei exakter Ausrichtung bspw. den nächsten Bearbeitungsschritt innerhalb einer in der Küchenmaschine 1 vorgesehenen Rezeptsteuerung freigeben. Darüber hinaus ist auch infolge einer solchen Kontaktierung der Heizdampf ausstellbar, sobald das Obergefäß 14 vom Deckel 8 entfernt wird. Ferner ist durch die Umfangsausrichtung des Obergefäßes 14 relativ zu dem Deckel 8 bevorzugt auch der Dampfdurchlass vom Gargefäß 3 in das Obergefäß 14 einstellbar.

Gemäß dem ersten Ausführungsbeispiel in den Fig. 1 bis 9 ist dies dadurch erreicht, dass zunächst der deckelseitige Dampfdurchlass 11 bevorzugt langgestreckt oval ausgebildet ist, dies bei bevorzugter mittiger Anordnung des Dampfdurchlasses 11 in der Deckelwand 10 (entsprechend die Achse x zentral aufnehmend).

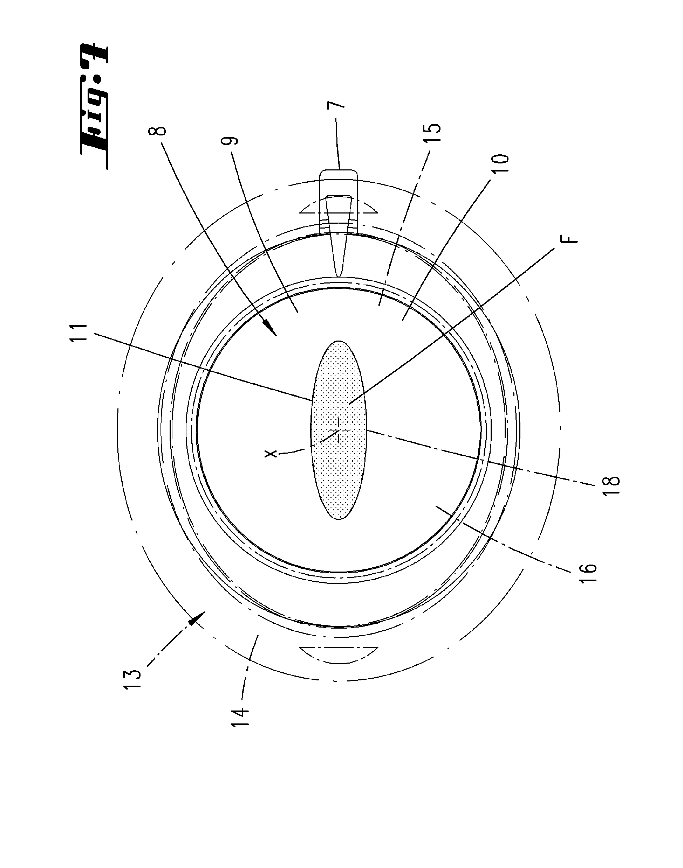

Die Dampfdurchtrittsöffnung 18 im Bereich des Gargut-Auflagebodens 16 ist in der ersten Ausführungsform bevorzugt konturgleich und gleich groß wie der Dampfdurchlass 11 des Deckels 8 ausgeformt, so dass die Dampfdurchtrittsöffnung 18 in einer Umfangsausrichtung des Obergefäßes 14 relativ zum Deckel 8 gemäß der Darstellung in Fig. 7 hinsichtlich seines umlaufenden Randes in vertikaler Überdeckung liegt zu dem umlaufenden Rand des deckelseitigen Dampfdurchlasses 11. Es ergibt sich entsprechend ein maximaler Dampfdurchlass bei maximaler Dampfdurchlass-Öffnungsfläche F (siehe punktierte Fläche in Fig. 7).

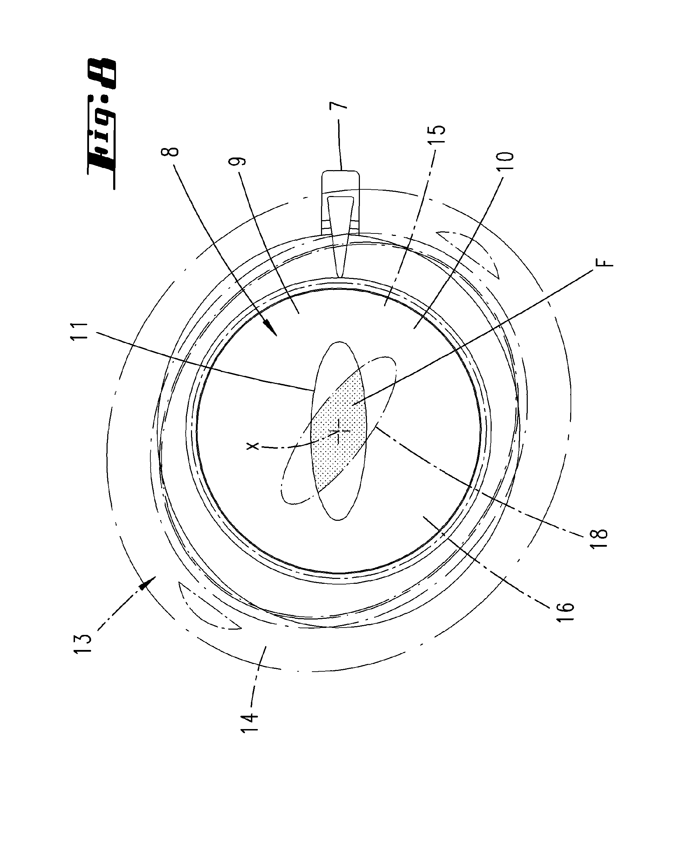

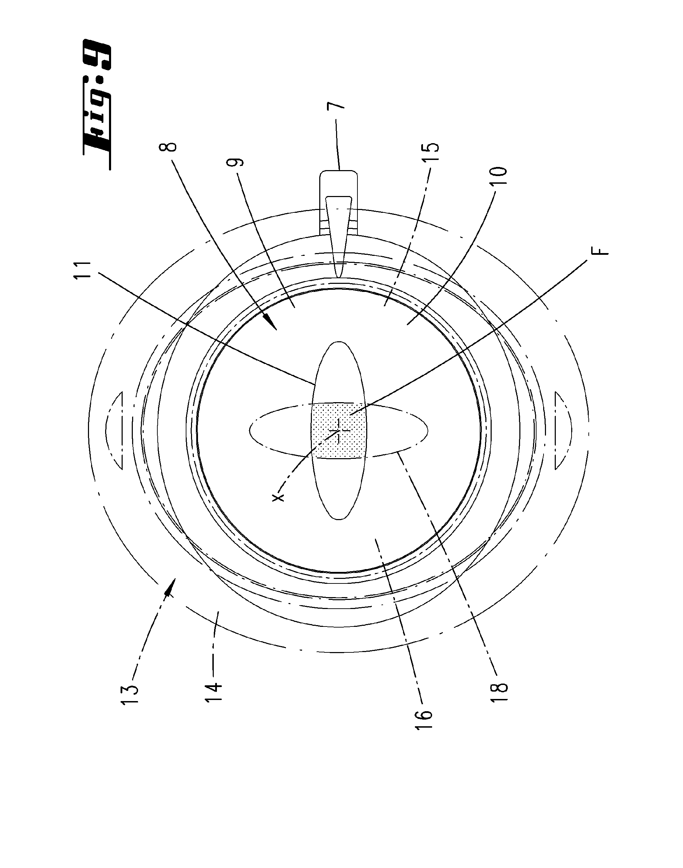

Durch die unterschiedlich möglichen Positionierungen des Obergefäßes 14 relativ zu dem Deckel 8 ist bevorzugt eine Steuerung der Dampfzufuhr in das Obergefäß 14 realisiert. Wird das Obergefäß 14 in einer anderen Position als in Fig. 7 dargestellt auf dem Deckel 8 aufgesetzt und bevorzugt magnetisch festgelegt, so wird bevorzugt der Volumenstrom des heißen Wasserdampfes stufenweise reguliert, so dass sich in den in den Fig. 8 und 9 beispielhaft dargestellten Obergefäß-Positionen zufolge entsprechender verdrehter Stellungen von Dampfdurchtrittsöffnung 18 und Dampfdurchlass 11 unterschiedlich große, gegenüber der Stellung in Fig. 7 reduzierte Dampfdurchtritts-Öffnungsflächen F ergeben (vgl. punktierte Flächen in den Fig. 8 und 9). Entsprechend wird die in das Obergefäß 14 eintretende Dampfmenge pro Zeiteinheit in Abhängigkeit von der Umfangsausrichtung des Obergefäßes 14 reguliert.

Etwaiger in dem Gargefäß 3 über die Menge des Dampfdurchtritts in das Obergefäß 14 hinaus produzierter Dampf kondensiert bspw. an der Unterseite des Deckels oder wird frei nach außen in die Umgebung abgelassen.

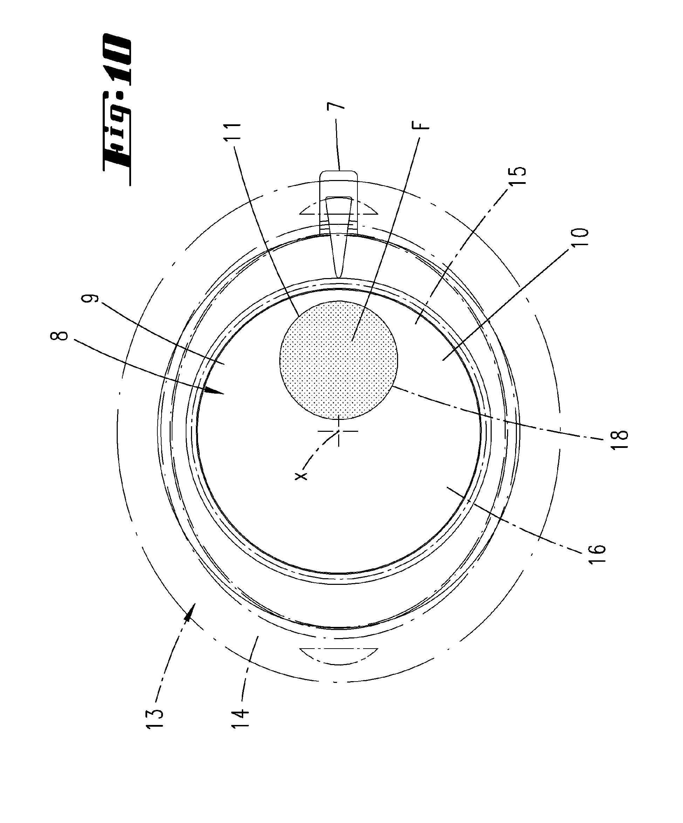

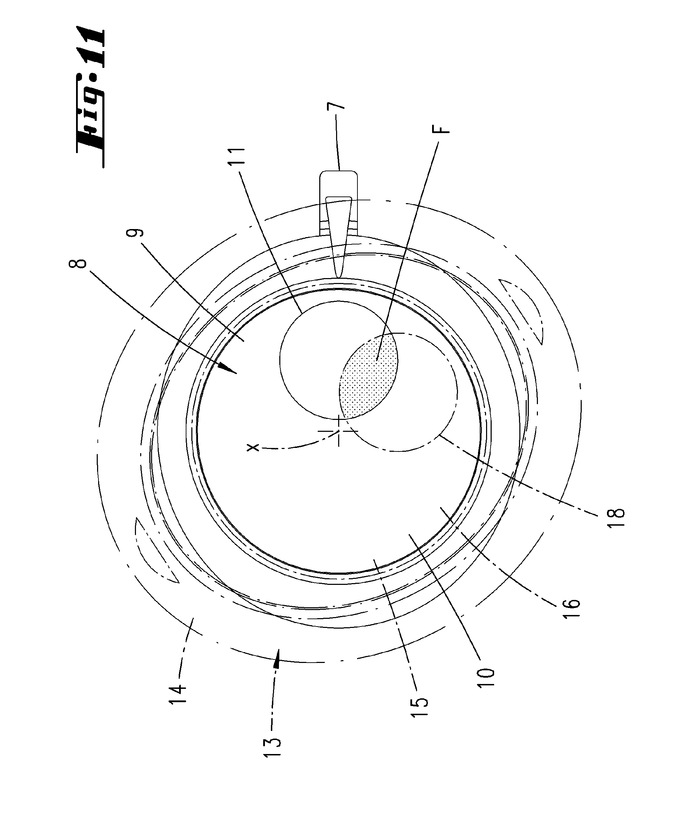

Die Fig. 10 und 11 zeigen eine weitere Ausführungsform hinsichtlich der Anordnung und Ausbildung von Dampfdurchlass 11 und Dampfdurchtrittsöffnung 18.

In diesem Beispiel sind diese beiden Öffnungen im Grundriss kreisförmig gestaltet, jedoch jeweils exzentrisch zur Achse x in der Deckelwand 10 bzw. in dem Gargut-Auflageboden 16 ausgeformt.

In Fig. 10 ist eine Ausrichtung des Obergefäßes 14 relativ zu dem Deckel 8 bzw. dem Gargefäß 3 schematisch dargestellt, in welcher der Dampfdurchlass 11 im Deckel 8 sowie die Dampfdurchtrittsöffnung 18 im Gargut-Auflageboden 16 übereinander liegen. In einer versetzten Umfangsausrichtung des Obergefäßes 14 gegenüber der Ausrichtung gemäß Fig. 10 überdeckt die Dampfdurchtrittsöffnung 18 des Gargut-Auflagebodens 16 nur noch teilweise den Dampfdurchlass 11 im Deckel 8 (siehe Fig. 11), so dass sich eine reduzierte Dampfdurchtritts-Öffnungsfläche F ergibt, was entsprechend eine Reduzierung des Dampfdurchtrittes in das Obergefäß 14 je Zeiteinheit zur Folge hat. Wenngleich nicht dargestellt, ist in einer möglichen weiteren Umfangsausrichtung des Obergefä-βes 14 relativ zu dem Deckel 8 keine auch nur teilweise Überdeckung von Dampfdurchtrittsöffnung 18 und Dampfdurchlass 11 erreicht, womit entsprechend der Dampfdurchtritt bzw. Dampfeintritt in das Obergefäß 14 unterbunden ist.

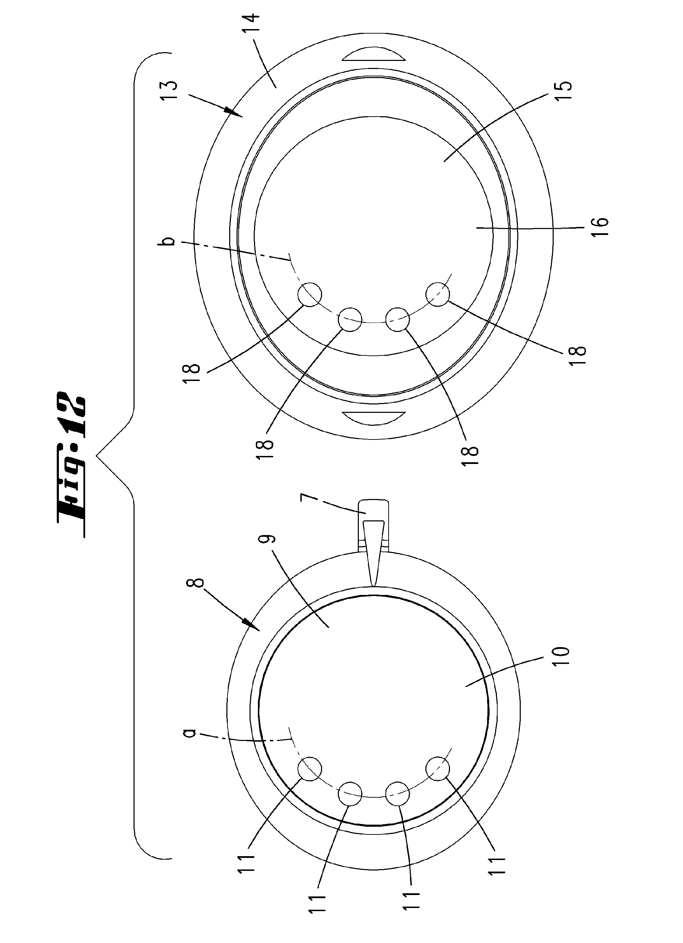

Eine weitere alternative Ausführungsform stellen die schematischen Darstellungen in den Fig. 12 bis 15 dar. In diesem Ausführungsbeispiel sind sowohl in dem Deckel 8 als auch in dem Gargut-Auflageboden 16 mehrere, hier bevorzugt gleich große und kreisförmige Dampfdurchlässe 11 sowie Dampfdurchtrittsöffnungen 18 vorgesehen, welche jeweils zugeordnet dem Deckel bzw. dem Auflageboden 16 auf einer konzentrisch zur Achse x ausgerichteten Kreislinie a bzw. b angeordnet sind. In dem dargestellten Ausführungsbeispiel sind jeweils vier Dampfdurchlässe 11 bzw. Dampfdurchtrittsöffnungen 18 vorgesehen, welche weiter bevorzugt in Umfangsrichtung zueinander gleichmäßig beabstandet angeordnet sind. Weiter sind diese Durchlässe bzw. Öffnungen insgesamt bevorzugt auf einer Halbkreislinie angeordnet.

Alternativ können auch mehr oder weniger solcher Durchlässe bzw. Öffnungen vorgesehen sein, so bspw. jeweils nur ein Durchlass bzw. Öffnung bis hin zu 20 oder 30. Darüber hinaus sind auch weitere Durchlässe oder Öffnungen auf konzentrischen Kreislinien radial innerhalb oder radial außerhalb der gezeigten Durchlässe bzw. Öffnungen möglich, bis hin zu einer insgesamt zumindest annähernd siebartigen Ausgestaltung der Deckelwand 10 und/oder des Auflagebodens 16.

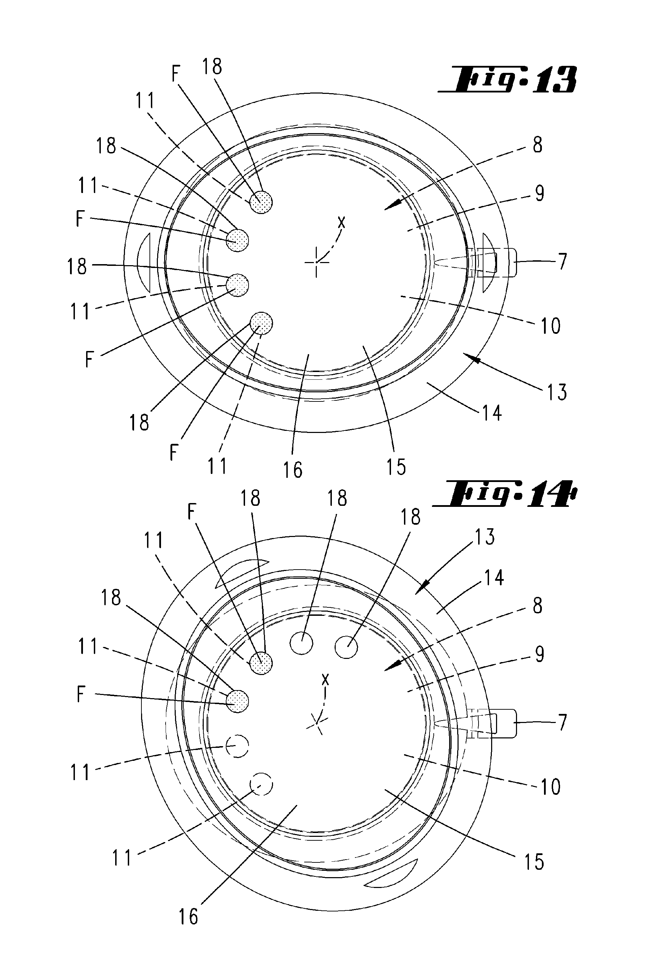

Ausgehend von der dargestellten Ausführungsform ist in Fig. 13 eine Umfangsausrichtung des Obergefäßes 14 dargestellt, in welcher die Dampfdurchtrittsöffnungen 18 im Auflageboden 16 in überdeckender Ausrichtung zu den Dampfdurchlässen 11 in der Deckelwandung 10 liegen. Entsprechend ist mit Bezug auf dieses Ausführungsbeispiel ein maximaler Dampfdurchlass in das Obergefäß 14 erreicht.

In einer weiteren, in Fig. 14 dargestellten Umfangsausrichtung des Obergefäßes 14 liegen nunmehr lediglich zwei Dampfdurchtrittsöffnungen 18 in Überdeckung zu den Dampfdurchlässen 11, womit hier der Dampfdurchlass auf die Hälfte reduziert ist.

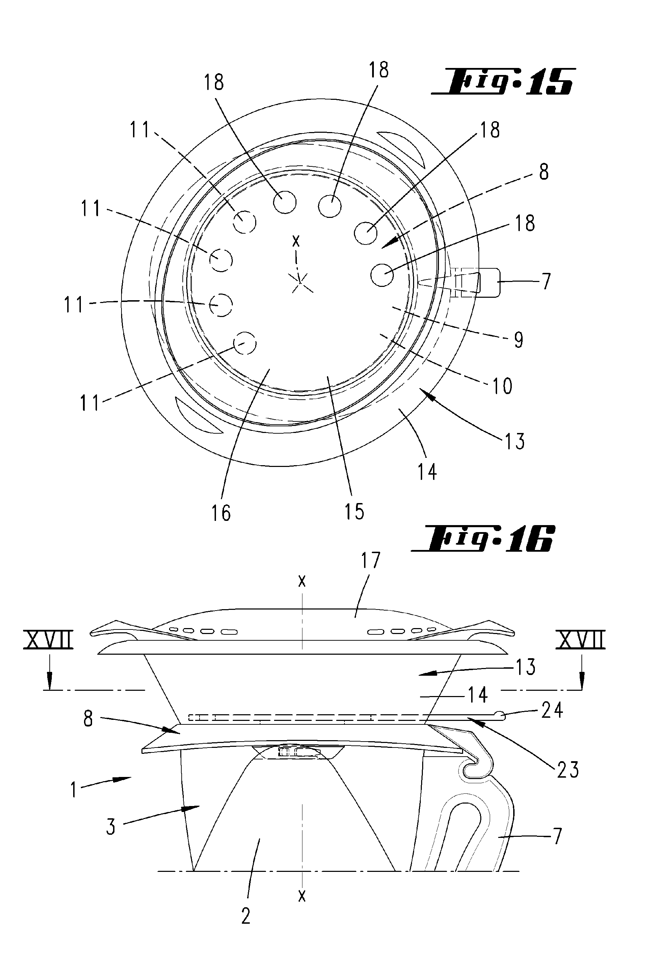

Fig. 15 zeigt eine Umfangsausrichtung des Obergefäßes 14, bei welcher keine Dampfdurchtrittsöffnung 18 in Überdeckung liegt zu einem Dampfdurchlass 11 des Deckels 8. Entsprechend ist der Dampfdurchsatz in das Obergefäß 14 unterbrochen.

Weiter alternativ ist der Dampfdurchsatz von dem Gargefäß 3 in das Obergefäß 14 bspw. durch eine Schieberblende 23 regulierbar. Diese ist bevorzugt handbetätigbar, wozu die Schieberblende 23 ein nach außen, bevorzugt in Richtung auf den Handgriff 7 frei abragendes Greifteil 24 aufweist.

Die Schieberblende 23 ist in einer Ausgestaltung in der Trennebene zwischen Deckel 8 und Obergefäß 14 bzw. Aufsatz 13 angeordnet zur blendenartigen Schieberregelung des deckelseitigen Dampfdurchlasses 11 und ggf. der auflagebodenseitigen Dampfdurchtrittsöffnung 18. In weiterer Ausgestaltung kann die Schieberblende 23 auch oberhalb des Auflagebodens 16, auf diesen in dem Obergefäß 14 aufliegend, angeordnet sein.

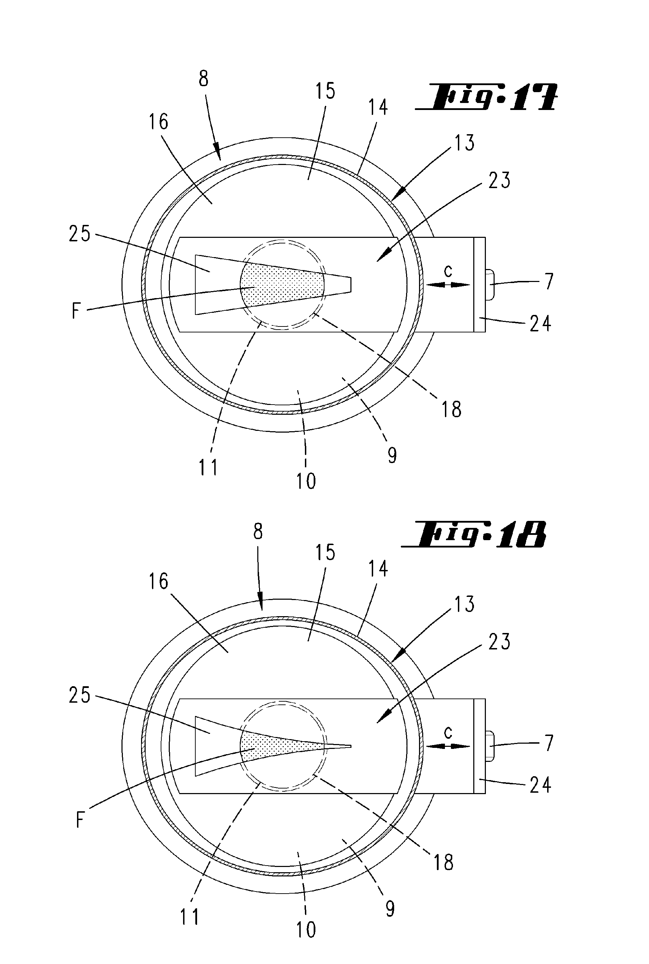

Die Schieberblende 23 weist gemäß der Ausführungsform in Fig. 17 eine insgesamt etwa keilförmige Schieberöffnung 25 auf, die zumindest teilweise in vertikaler Überdeckung bringbar ist insbesondere zu dem Dampfdurchlass 11 des Deckels 8. Durch lineare Schiebeverlagerung der Schieberblende 23 gemäß dem Doppelpfeil c in Fig. 17 ist eine lineare Beeinflussung der freien Dampfdurchtritts-Öffnungsfläche F erreichbar.

Fig. 18 zeigt eine Weiterbildung der Ausführungsform gemäß Fig. 17, bei welcher die in Schieberichtung c ausgerichteten Flanken der Schieberöffnung 25 gekrümmt aufeinander zu verlaufen, wodurch eine nicht-lineare Beeinflussung des Dampfstromes und somit eine entsprechend nicht-lineare Veränderung der freien Dampfdurchtritts-Öffnungsfläche F in Abhängigkeit von der Schieberstellung erreichbar ist.

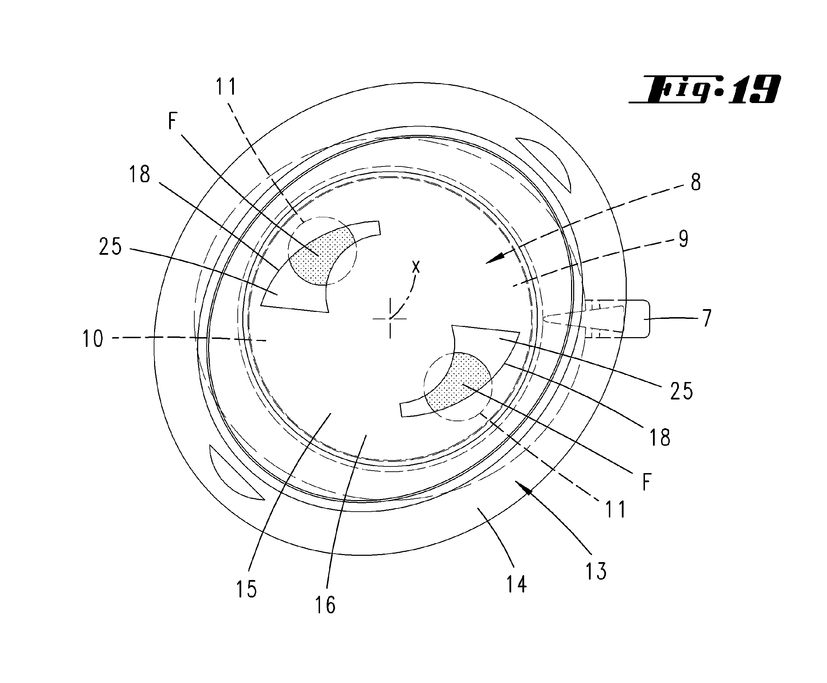

Fig. 19 zeigt eine Ausführungsform , bei welcher eine rotatorisch wirkende Schieberlösung vorgesehen ist. Die Schieberblende wird hierbei bevorzugt durch das Aufsatzteil 13, insbesondere durch das Obergefäß 14 gebildet, welches im Bereich des Auflagebodens 16 in dem dargestellten Ausführungsbeispiel bevorzugt diametral gegenüberliegend angeordnete Dampfdurchtrittsöffnungen 18 aufweist. Während diese Dampfdurchtrittsöffnungen 18 langgestreckt in Umfangsrichtung sich erweiternd, annähernd sichelartig ausgebildet sind, sind die bevorzugt gleichfalls diametral gegenüberliegend in der Deckelwand 10 ausgebildeten Dampfdurchlässe 11 kreisrund gebildet.

Zufolge unterschiedlicher Umfangsausrichtungen des Obergefäßes 14 relativ zu dem Deckel 8 und entsprechender Zuordnung unterschiedlich breiter (in radialer Richtung betrachtet) Bereiche der Dampfdurchtrittsöffnungen 18 zu den Dampfdurchlässen 11 ist eine Regulierung des Dampfdurchlasses infolge einer Reduzierung bzw. Erweiterung der Dampfdurchtritts-Öffnungsfläche F erreichbar, dies ggf. bis hin zu einem vollständigen Verschluss und entsprechender Unterbindung des Dampfdurchtrittes. Auch hierbei ist bevorzugt eine nicht-lineare Beeinflussung des Dampfdurchlasses gegeben.

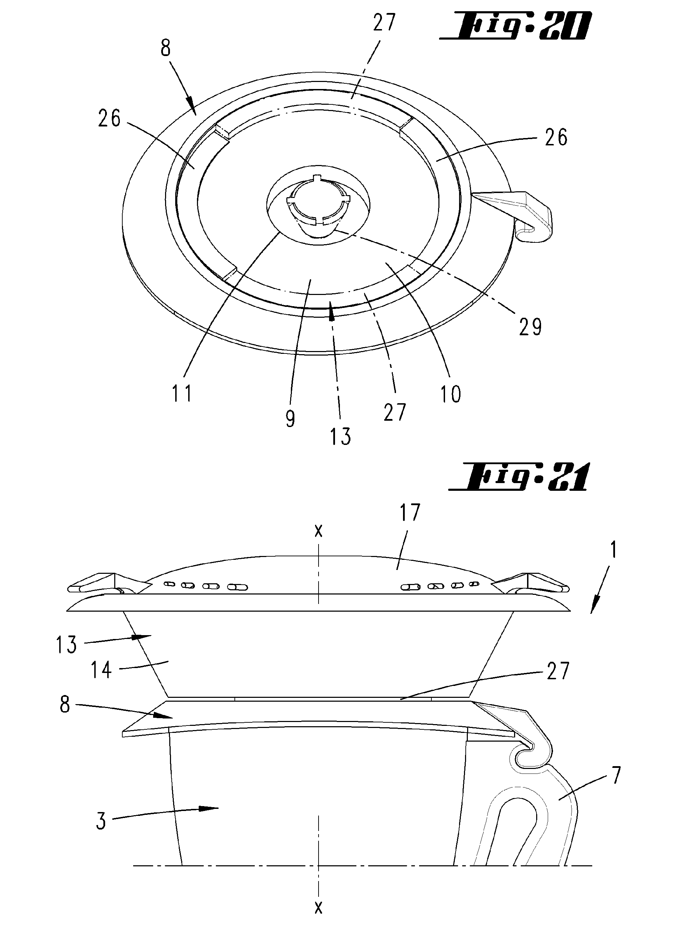

Eine weiter bevorzugte Ausgestaltung sieht vor, den Dampfdurchtritt zufolge Änderung des vertikalen Abstandes zwischen Gargut-Auflageboden 16 und Aufstandsfläche 9 des Deckels 8 zu verändern. Hierzu ist gemäß der Ausführungsform in den Fig. 20 bis 22 auf der Aufstandsfläche 9 des Deckels 8 eine schiefe Ebene vorgesehen. Diese ist gebildet bevorzugt durch zwei diametral gegenüberliegende Rampen 26, welche in derselben Umfangsrichtung ausgehend von der Aufstandsfläche 9 ansteigen.

Diese Rampen 26 wirken unmittelbar mit der Unterseite des Auflagebodens 16 zusammen, bevorzugt mit entsprechenden Negativrampen. Weiter bevorzugt wirken die Rampen 26 mit, bevorzugt eine ebene Abstützfläche bildenden, im Grundriss kreisringabschnittförmigen Abstützwandungen 27 zusammen, welche unterseitig des Auflagebodens 16 an diesem angeordnet sind.

Stützt sich das Obergefäß 14 über die Abstützwandungen 27 auf der Aufstandsfläche 9 des Deckels 8 ab, so ist bevorzugt eine vertikal unterste Stellung der Anordnung erreicht, in welcher bevorzugt ein maximaler Dampfdurchlass aus dem Gargefäß 3 in das Obergefäß 14 erreicht ist, wobei die Abstützwandungen 27 und bevorzugt auch die Rampen 26 einen Übergangsraum zwischen Deckel 8 und Auflageboden 16 umschließen.

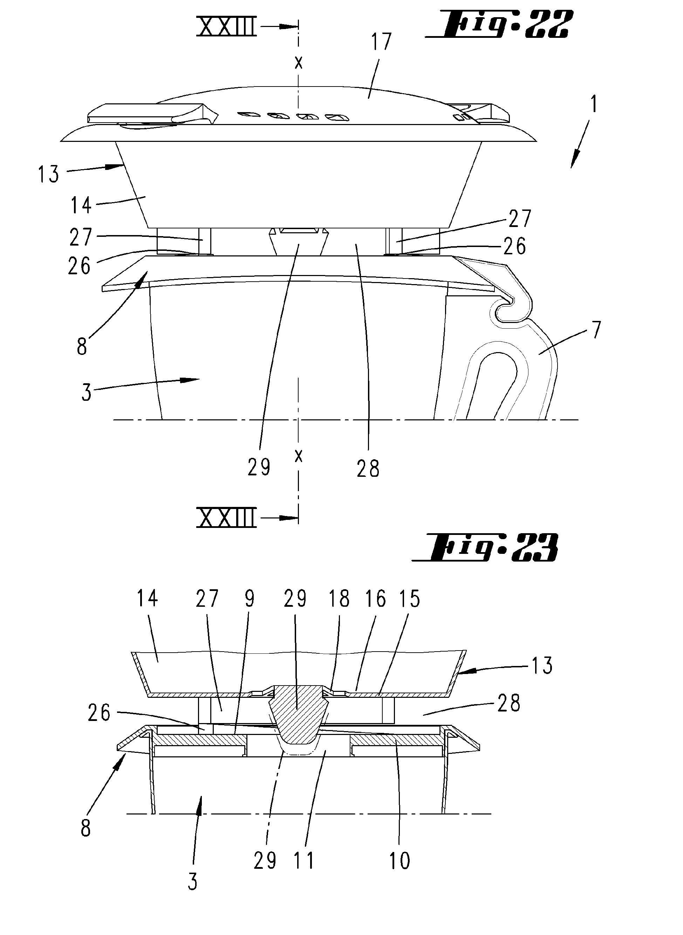

Mit umfangsversetzter Anordnung des Obergefäßes 14 relativ zum Deckel 8 und damit einhergehendem Abstützen der Abstützwandungen 27, bzw. an diesen angeformten Negativrampen, auf den Rampen 26 ist eine zumindest vergrößerte vertikale Beabstandung des Auflagebodens 16 gegenüber der Aufstandsfläche 9 (im Vergleich zu der vertikal untersten Stellung) erreicht, in welcher vertikal beabstandeten Stellung bevorzugt zugleich sich in Umfangsrichtung zwischen den Abstützwandungen 27 ausgebildete Radial-Austrittsöffnungen 28 ergeben (vgl. Fig. 22). Der aus dem bevorzugt zentral in der Deckelwand 10 vorgesehenen Dampfdurchlass 11 aus dem Gargefäß 3 austretende Dampf entweicht zum Teil durch die entstehenden seitlichen Austrittsöffnungen 28 in die Umgebung, bevor dieser das Obergefäß 14 nach Durchtritt durch eine entsprechend vorgesehene Dampfdurchtrittsöffnung 18 erreicht. Der Teil des Dampfes, der frei nach außen durch die Austrittsöffnungen 28 in die Umgebung entweicht, steht somit nicht mehr für den Garprozess zur Verfügung.

Alternativ oder auch ergänzend zu der in den Fig. 20 bis 22 dargestellten Ausführungsform ist an dem Aufsatzteil 13 unterseitig ein nach unten ragender keilartiger Vorsprung 29 vorgesehen. Dieser ragt zumindest in einer relativen Vertikalstellung des Auflagebodens 16 zur Aufstandsfläche 9 des Deckels 8 in den Dampfdurchlass 11 des Deckels 8 ein, womit in Abhängigkeit von einer Vertikalstellung und entsprechender Vertikalpositionierung des Vorsprunges 29 eine Regulierung der freien Dampfdurchtritts-Öffnungsfläche F im Bereich des Dampfdurchlasses 11 erreichbar ist, wobei bevorzugt der Vorsprung 29 hinsichtlich seines maximalen Durchmessers so gewählt ist, dass in keiner Vertikalstellung desselben ein vollständiger Verschluss des Dampfdurchlasses 11 erreichbar ist. Es verbleibt bevorzugt stets eine den Vorsprung 29 zumindest in einer vertikalen Projektion umgebende kreisringförmige Dampfdurchtritts-Öffnungsfläche F, deren radiales Erstreckungsmaß in Abhängigkeit von der vertikalen Stellung des Vorsprunges 29 regulierbar ist.

Die Regulierung des Dampfdurchlasses insbesondere infolge unterschiedlicher Umfangsausrichtungen des Aufsatzteiles 13 relativ zu dem Deckel 8 ist auch ohne Festlegungsmittel, wie die beschriebenen Magnete, durchführbar. Es ergibt sich hierbei bevorzugt eine stufenlose Regulierung der Dampfdurchtritts-Öffnungsfläche F. Gegebenenfalls weiterhin vorgesehene Magnete dienen in diesem Zusammenhang bevorzugt lediglich der Markierung von Anfangs- und End-(oder Zwischen-)Positionen. Weiterhin ist vorgesehen, durch den Einsatz von Magneten und bspw. "Reed"-Kontakten durch Verdrehen des Obergefäßes 14 relativ zu dem Deckel 8 eine Ansteuerung der Heizung durchzuführen, wobei bevorzugt in Abhängigkeit von der Drehposition des Aufsatzteiles 13 bzw. Obergefäßes 14 die Heiztemperatur bevorzugt selbsttätig durch eine entsprechend vorgesehene Software einstellbar ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste:

- 1: Küchenmaschine
- 2: Gehäuse
- 3: Gargefäß
- 4: Gefäßaufnahme
- 5: Elektromotor
- 6: Rührwerk
- 7: Handgriff
- 8: Deckel
- 9: Aufstandsfläche
- 10: Deckelwand
- 11: Dampfdurchlass
- 12: Temperatursteller
- 13: Aufsatzteil
- 14: Obergefäß
- 15: Trennwand
- 16: Gargut-Auflageboden
- 17: Obergefäßdeckel
- 18: Dampfdurchtrittsöffnung
- 19: Magnet
- 20: Magnet
- 21: Metallplatte
- 22: Reed-Kontakt
- 23: Schieberblende
- 24: Greifteil
- 25: Schieberöffnung
- 26: Rampe
- 27: Abstützwandung
- 28: Radial-Austrittsöffnung
- 29: Vorsprung

- a: Kreislinie
- b: Kreislinie
- c: Schieberichtung
- x: Achse

## Patentansprüche

1. Topfförmiges Gargefäß (3) und mindestens ein Aufsatzteil (13), wobei das Gargefäß (3) einen Deckel (8), der vorzugsweise einen bspw. mittigen Dampfdurchlass (11) belässt, aufweist, wobei das Aufsatzteil (13) auf den Deckel (8) aufsetzbar ist, **gekennzeichnet durch** eine mechanische oder magnetische Festsetzung des Aufsatzteils (13) an dem Deckel (8).

2. Gargefäß nach Anspruch 1 oder insbesondere danach, **dadurch gekennzeichnet, dass** das Aufsatzteil (13) in unterschiedlichen Umfangsausrichtungen relativ zu dem Gargefäß (3) auf dem Deckel (8) festsetzbar ist.

3. Gargefäß nach einem oder mehreren der vorhergehenden Ansprüche oder insbesondere danach, **dadurch gekennzeichnet, dass** das Aufsatzteil (3) durch eine Magnetverhaftung zwischen dem Aufsatzteil (13) und dem Deckel (8) festsetzbar ist.

4. Gargefäß nach einem oder mehreren der vorhergehenden Ansprüche oder insbesondere danach, **dadurch gekennzeichnet, dass** das Aufsatzteil (13) durch ledigliche Vertikal- und/oder Umfangsbewegung mit dem Deckel (8) verrastbar ist.

5. Gargefäß nach einem oder mehreren der vorhergehenden Ansprüche oder insbesondere danach, **dadurch gekennzeichnet, dass** ein Aufsatzteil (13) hinsichtlich seiner Oberseite und seiner Unterseite unterschiedlich auf den Deckel (8) oder ein weiteres Aufsatzteil (13) aufsetzbar ist und dass eine nicht vorzuziehende Ausrichtung des Aufsatzteils (13) durch abstoßende Magnete (19, 20) verdeutlicht ist.
